# FASCICULE DE BREVET EUROPEEN

(11) **EP 2 556 914 B1**
(45) Date de publication et mention de la délivrance du brevet: **30.05.2018**
(21) Numéro de dépôt: 12176819.6
(22) Date de dépôt: 18.07.2012
(51) Int. Cl.: B23K 9/32

(54) **Installation et torche de soudage à l'arc avec système d'aspiration des fumées**
Lichtbogenschweißanlage und -brenner mit Rauchabsaugsystem
Arc-welding installation and torch with fume-extraction system

(30) Priorité: 12.08.2011 FR 1157315
(43) Date de publication de la demande: 13.02.2013
(73) Titulaire: AIR LIQUIDE WELDING FRANCE, 75007 Paris (FR)
(72) Inventeur: Maocec, Christian, 60700 Pont Sainte Maxence (FR); Dubos, Marc, 95260 Beaumont sur Oise (FR)
(74) Mandataire: Grosse Schumacher Knauer von Hirschhausen

(56) Documents cités:
- WO-A1-02/30609
- US-A1- 2006 226 136

## Description

L'invention porte sur une installation de soudage avec torche manuelle de soudage, de préférence de type MIG/MAG, avec aspiration des fumées émises pendant une opération de soudage, le contrôle du système d'aspiration des fumées se faisant grâce à une commande à distance directement intégrée au corps de torche.

En soudage MIG/MAG manuel, un soudeur tient habituellement à la main une torche de soudage manuelle qui est utilisée pour réaliser le ou les joints de soudure désirés.

Afin de se conformer à certaines réglementations ou normes qui stipulent que, s'il n'est pas possible de supprimer les émissions sous forme de gaz, vapeurs, aérosols de particules solides ou liquides, de substances insalubres, gênantes ou dangereuses pour la santé des travailleurs, elles doivent être captées au fur et à mesure de leur production, au plus près de leur source d'émission et aussi efficacement que possible, certaines torches manuelles sont équipées d'un conduit ou analogue d'évacuation des fumées qui est connecté fluidiquement à une centrale d'aspiration de sorte de permettre une aspiration des fumées de soudage grâce à un capteur de fumées, assemblé à une portion coudée de la torche de soudage, qui fait souvent, par ailleurs office de porte-buse.

Ces fumées sont aspirées par le capteur portant la buse, sont canalisées ensuite dans la portion coudée, le manche de torche, puis dans une gaine, et enfin dans un connecteur spécialement étudié pour le raccordement avec un générateur de soudage et une centrale d'aspiration.

Par ailleurs, il est connu que l'efficacité d'aspiration dépend de plusieurs paramètres qui sont le profil de buse et de la portion coudée, les pertes de charge du circuit d'aspiration de la torche et les caractéristiques du système d'aspiration, principalement le débit et la dépression dudit système.

Or, cette efficacité d'aspiration n'est plus optimale quand le soudeur doit intervenir dans une zone de soudage exigüe, tel un joint profond ou en angle fermé.

En effet, dans de tels cas, la vitesse d'aspiration du gaz entraine aussi une partie du gaz de protection distribué par la buse, ce qui conduit à une dégradation la qualité de la soudure.

Pour palier ce problème, il convient d'ajuster le débit d'aspiration, en particulier de le réduire pour diminuer ou au moins limiter fortement la quantité de gaz de protection inopinément aspirée en même temps que les fumées de soudage.

Pour ce faire, l'opérateur peut intervenir sur le réglage mécanique de sa torche pour réduire la dépression au niveau du manche de la torche,

Actuellement, le réglage du débit d'aspiration au niveau du capteur se fait en aménageant un orifice de fuite dans la partie amont du manche de torche, c'est-à-dire dans la partie supérieure de ce manche, ayant pour effet de réduire la dépression à l'entrée du coude d'aspiration, et donc du débit qui en résulte, mais en général, cela ne suffit pas.

Il doit alors :
- soit arrêter totalement le système d'aspiration mais cela n'est pas conseillé,
- soit manoeuvrer manuellement une vanne, en sortie de l'aspirateur, pour limiter le débit d'aspiration. Mais, cette solution n'est pas idéale non plus car il lui faudra ensuite se rappeler de le remettre en efficacité totale dès que le soudage dans la zone de soudage exigüe sera terminé.

Dans tous les cas, il faut que l'opérateur se déplace pour faire cette intervention, ce qui n'est pas pratique et conduit à une perte de temps et donc de productivité globale.

D'ailleurs, pour éviter cela, les opérateurs font fonctionner leurs torches avec un réglage minimum pour toutes les configurations de joint de soudure, que la zone de soudage soit exigüe ou non, ce qui conduit à opérer un soudage dont la protection gazeuse n'est plus efficace et qui par ailleurs conduit à une pollution de l'environnement car toutes les fumées ne sont pas efficacement aspirées.

Pour tenter de remédier à cela, il a été proposé différentes solutions mais aucune n'est pleinement satisfaisante, notamment parce qu'elles n'autorisent pas de modulation ou, dit autrement, de régulation du débit des fumées aspirées.

Ainsi, le document WO-A-02/30609 divulgue un dispositif de soudage à l'arc permettant un contrôle à distance du système d'aspiration des fumées par ouverture ou fermeture d'une vanne d'arrêt, de manière à autoriser ou stopper le débit d'aspiration.

Quant à US-A-2006/0226136, il décrit un dispositif de soudage permettant de contrôler à distance une variation du débit d'aspiration entre deux valeurs uniquement, selon qu'une première portion de conduit ou une deuxième portion de conduit de plus petit diamètre est alignée avec le conduit d'aspiration.

Or, les réglages pour lesquels le débit d'aspiration donne lieu une aspiration efficace des fumées, sans perturbation de la distribution du gaz de protection, sont différents selon chaque type de configuration de soudage. Une régulation fine et aisée du débit d'aspiration s'avère donc indispensable dans de nombreuses applications, afin notamment que l'opérateur puisse adapter le débit d'aspiration en fonction du procédé de soudage opéré ou de la zone de soudage dans laquelle il intervient.

De là, le problème qui se pose est de proposer une torche manuelle et une installation de soudage à l'arc électrique améliorée ne posant pas tout ou partie des problèmes et inconvénients susmentionnés. En particulier, la torche proposée doit permettre un réglage aisé, rapide et précis, notamment une modulation ou régulation, du débit d'aspiration par l'opérateur, c'est-à-dire le soudeur-équipé de gants de protection et ce, sans qu'il n'ait besoin de se déplacer pour agir manuellement sur le système d'aspiration.

La solution de l'invention est une installation de soudage à l'arc comprenant une torche manuelle de soudage à l'arc électrique et un système d'aspiration de fumées relié fluidiquement à ladite torche de soudage par une ligne d'aspiration de fumées, dans laquelle ladite torche comprend :
- un corps de torche (1) comprenant un manche de manipulation (2), une gâchette de commande électrique (3) et un dispositif de commande à distance (4),
- un conduit d'évacuation des fumées traversant le corps (1) de torche et apte à être raccordé fluidiquement à la ligne d'aspiration (8) de fumées,
- une portion tubulaire coudée (5), fixée audit corps de torche (1), comprenant un passage interne en communication fluidique avec le conduit d'évacuation des fumées traversant le corps de torche (1), et
- une buse de soudage (6) fixée à ladite portion tubulaire (5) coudée,
- des moyens de connexion (12) aptes à et conçus pour relier électriquement le dispositif de commande à distance (4) de la torche :
   - à des moyens de contrôle de passage de gaz (9) agencés sur la ligne d'aspiration (8) ou sur une ligne supplémentaire (11) reliée fluidiquement à ladite ligne d'aspiration (8), et
   - à des moyens de pilotage (13) du système d'aspiration (10) de fumées,
   caractérisée en ce que le dispositif de commande à distance (4) est apte à et conçu pour, lorsqu'il est actionné par l'opérateur :
- agir sur les moyens de contrôle de passage de gaz (9) agencés sur la ligne d'aspiration (8) ou sur une ligne supplémentaire (11) reliée fluidiquement à ladite ligne d'aspiration (8) de manière à faire varier le débit de fumées aspirées circulant dans au moins une partie de ladite ligne d'aspiration (8), dans le conduit d'évacuation des fumées et dans la portion tubulaire coudée (5) de la torche, et
- agir sur les moyens de pilotage (13) du système d'aspiration (10) de fumées de sorte que lesquels moyens de pilotage (13) rétroagissent sur un moteur dudit système d'aspiration (10) de fumées pour faire varier la vitesse de rotation dudit moteur et moduler le débit d'aspiration du système d'aspiration (10) de fumées.

Selon le cas, l'installation de soudage de l'invention peut comprendre l'une ou plusieurs des caractéristiques techniques suivantes :
- le dispositif de commande à distance est apte à et conçu pour, lorsqu'il est actionné par l'opérateur, agir sur les moyens de pilotage du système d'aspiration de fumées de manière à mettre en marche ou, à l'inverse, stopper le système d'aspiration.
- le dispositif de commande à distance est apte à et conçu pour, lorsqu'il est actionné par l'opérateur, agir sur les moyens de contrôle de passage de gaz agencés sur la ligne d'aspiration ou sur une ligne supplémentaire reliée fluidiquement à ladite ligne d'aspiration (8) de manière à ce que les moyens de contrôle de passage de gaz (9) viennent obturer plus ou moins la ligne sur laquelle lesdits moyens de contrôle de passage de gaz (9) pour diminuer plus ou moins le débit d'aspiration.

- le système d'aspiration de fumées est une turbine motorisée.
- les moyens de contrôle de passage de gaz agencés sur la ligne d'aspiration ou sur une ligne supplémentaire reliée fluidiquement à ladite ligne d'aspiration comprennent un registre ou une vanne à fermeture.
- la portion tubulaire coudée de la torche comprend un premier conduit interne venant se raccorder à un deuxième conduit interne du corps de torche, lesdites premier et deuxième conduits servant à véhiculer au moins un fil fusible de soudage.
- le corps de la torche est relié en outre par une ou des liaisons électriques à un générateur de courant de soudage et/ou à un dévidoir de fil comportant une bobine de fil et/ou par au moins une liaison fluidique à une source de gaz de soudage, de préférence les liaisons électriques et fluidique sont rassemblées au sein d'un faisceau de câbles et de conduits.
- le dispositif de commande à distance est en outre relié électriquement au générateur de courant de soudage ou au dévidoir de fil.
- la ligne supplémentaire est reliée fluidiquement par une extrémité aval à la ligne d'aspiration et comprend par ailleurs une extrémité amont reliée fluidiquement à l'atmosphère ambiante.
- les moyens de connexion comprennent un ou plusieurs câbles électriques.
- les moyens de pilotage du système d'aspiration de fumées comprennent un variateur de fréquence qui alimente en courant électrique le moteur dudit système d'aspiration de fumées et l'actionnement du dispositif de commande à distance engendre une commande du variateur de fréquence résultant en une variation de la vitesse de rotation du moteur du système d'aspiration de fumées.
- le dispositif de commande à distance comprend au moins un bouton poussoir, un commutateur à plots ou un potentiomètre actionnable par l'opérateur.
- la portion tubulaire coudée comprend un premier conduit interne venant se raccorder à un deuxième conduit interne du corps de torche, lesdites premier et deuxième conduits servant à guider le conduit d'usure (ou liner) servant lui-même de guide pour le fil fusible de soudage ; et véhiculer le gaz de protection jusque dans le diffuseur de gaz et la buse de protection de l'arc électrique ;
- l'extrémité aval de la portion tubulaire coudée est reliée à un capteur de fumée, qui peut être éventuellement coiffé d'une jupe externe formant manchon autour de celui-ci de sorte de renforcer l'aspiration dans le cas de très fortes émissions de fumées, comme par exemple lors d'un soudage MAG avec fil fourré fusible.
- la torche est de type MIG/MAG.
- le fil fusible est un fil plein ou un fil fourré.
- le manche de la torche est conformé et dimensionné pour pouvoir être tenu en main par un opérateur de soudage, en particulier un soudeur muni de gants de protection.
- la gâchette de commande électrique sert à déclencher le cycle de soudage organisé ou programmé dans le générateur de soudage, en particulier, la puissance électrique (intensité, tension), le contrôle de la vitesse du fil fusible de soudage, et le contrôle du gaz de protection de l'arc électrique.
- l'organe de commande à distance permet de régler à distance un ou plusieurs paramètres de soudage, notamment tension, intensité, vitesse de fil, N° de programme...

L'invention concerne aussi une torche manuelle de soudage à l'arc électrique selon la revendication 13. De préférence, la torche est de type MIG/MAG. Elle est reliée au générateur, au dévidoir et à la source de gaz via un faisceau de câbles électriques et de canalisations.

Par ailleurs, l'invention porte aussi sur un procédé de soudage manuel à l'arc électrique, en particulier de soudage MIG/MAG, mettant en oeuvre une installation de soudage selon l'invention.

L'invention va maintenant être décrite plus en détail en références aux figures annexées parmi lesquelles :
- la Figure 1 représente un mode de réalisation d'une torche de soudage selon l'invention,
- la Figure 2 illustre un premier mode de réalisation d'une installation selon l'invention avec commande du moteur du système d'aspiration et registre ou vanne motorisée agencé en série sur la ligne d'aspiration entre la torche de la Figure 1 et le système d'aspiration,
- la Figure 3 illustre un deuxième mode de réalisation d'une installation selon l'invention avec commande du moteur du système d'aspiration et registre ou vanne motorisée agencé en parallèle sur une ligne supplémentaire connectée à la ligne d'aspiration,
- la Figure 4 illustre un exemple hors invention d'une installation avec commande du moteur du système d'aspiration et sans registre ou vanne motorisée.

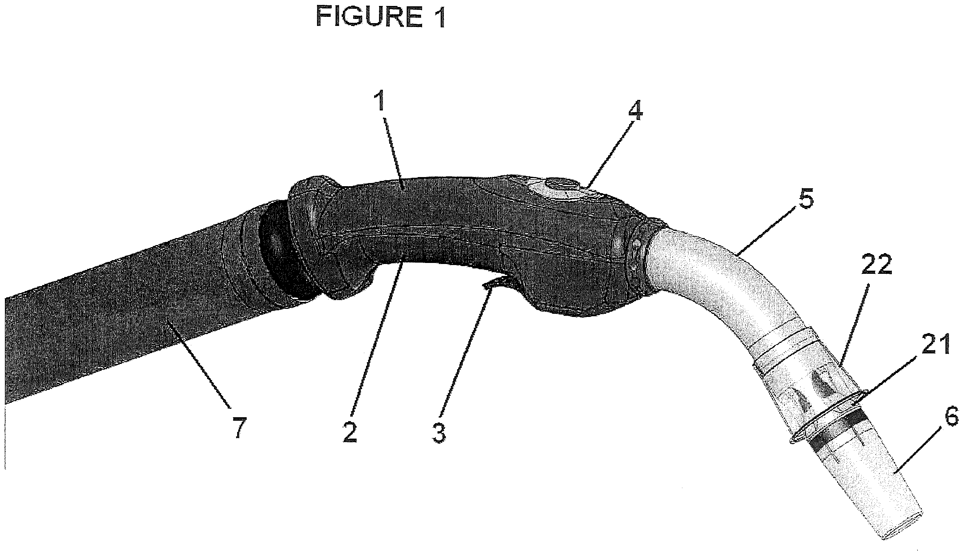

La Figure 1 représente un mode de réalisation d'une torche manuelle de soudage à l'arc électrique selon la présente invention, par exemple une torche de soudage MIG (pour *Metal Inert Gas*), c'est-à-dire de soudage avec apport de métal sous forme d'un fil fusible 11 et mise en place d'une protection gazeuse inerte à base d'un ou plusieurs gaz, tel l'argon, l'hélium et leurs mélanges, ou MAG (pour *Metal Active Gas*) avec une protection gazeuse active à base de CO₂ ou d'un mélange d'argon avec du CO₂, les gaz étant en proportions variables selon les métaux à souder.

Cette torche comprend un corps de torche 1 muni d'un manche ou poignée de manipulation 2 que l'opérateur tient à la main pendant l'opération de soudage proprement dite, ainsi que d'une gâchette de commande électrique 3 et d'un dispositif de commande à distance 4.

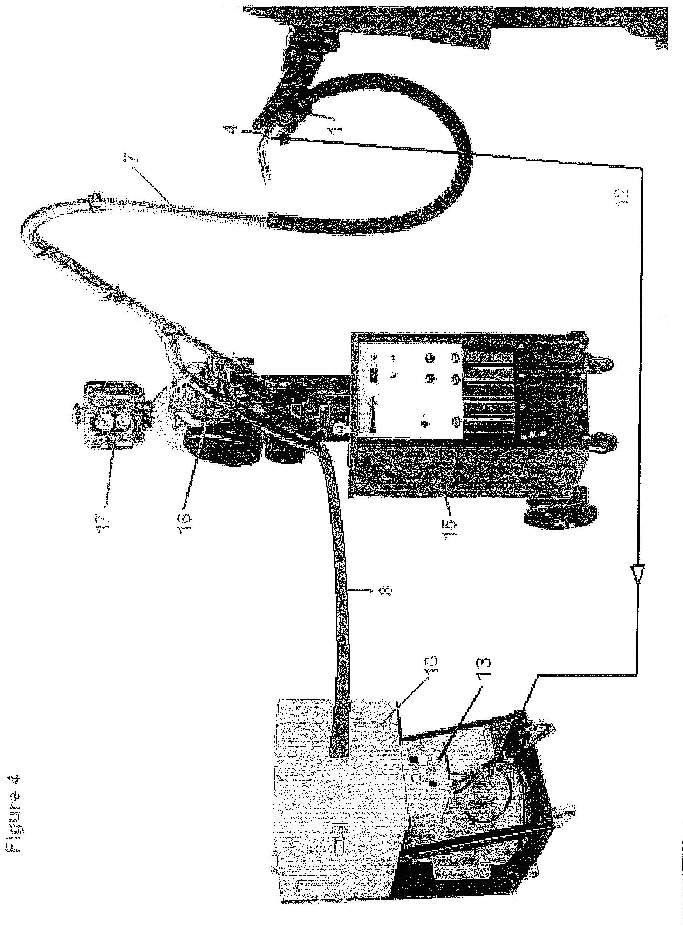

La gâchette de commande électrique 3 est agencée sur un circuit électrique reliant la torche à un générateur 15 de courant de soudage (voir Fig. 4), et son activation par l'opérateur permet d'autoriser le passage du courant électrique servant à fondre le fil de soudage fusible au niveau de la buse 6 équipant la torche, comme expliqué ci-après.

Par ailleurs, le dispositif de commande à distance 4 permet à l'opérateur de commander à distance des équipements de soudage, en particulier le générateur 15 de courant de soudage et/ou le dévidoir de fil 16, de manière à pouvoir régler un ou des paramètres de soudage sans avoir à se déplacer jusqu'à ces équipements, par exemple des paramètres du type puissance délivrée, tension, intensité, vitesse de fil, type de programme de soudage...

La torche comprend également une portion tubulaire coudée 5, qui vient se raccorder, par son extrémité amont, au corps de torche 1, et qui comprend un passage interne en communication fluidique avec un conduit d'évacuation des fumées traversant le corps de torche 1 de manière à pouvoir opérer une aspiration et une évacuation de tout ou partie des fumées émises pendant l'opération de soudage, notamment du fait de la fusion du fil fusible par l'arc électrique.

Le conduit d'évacuation des fumées traversant le corps de torche 1 est relié fluidiquement, via une ligne d'aspiration 8, à un système 10 d'aspiration des fumées motorisé, telle une turbine, une centrale d'aspiration, une pompe pneumatique ou analogue, qui commandé par des moyens de pilotage 13 incluant par exemple un variateur électrique, ou électronique, ou un variateur de fréquence.

La ligne d'aspiration 8 peut être comprise dans le faisceau 7 de câbles et de conduit(s) de gaz habituellement raccordé au corps 1 de la torche ou alors indépendant de ce faisceau 7.

Comme illustré en Figure 1, l'extrémité aval de la portion tubulaire 5 coudée reliée au capteur 21 de fumée, peut être éventuellement coiffée d'une jupe externe 22 formant manchon autour de celui-ci de sorte de renforcer l'aspiration en cas de très fortes émissions de fumées.

L'évacuation des fumées se fait ensuite par le canal interne du corps de torche puis par la gaine 7, relié à une centrale d'aspiration, par exemple un dispositif à turbine motorisée ou analogue.

Par ailleurs, le capteur de fumées 22 porte, à son extrémité aval, une buse de soudage 6 par laquelle sort le fil fusible fondu par l'arc électrique et qui permet par ailleurs de distribuer le gaz de protection dans la zone de soudage de manière à la protéger de toute contamination par des impuretés atmosphériques, tel l'oxygène, l'azote ou la vapeur d'eau par exemple.

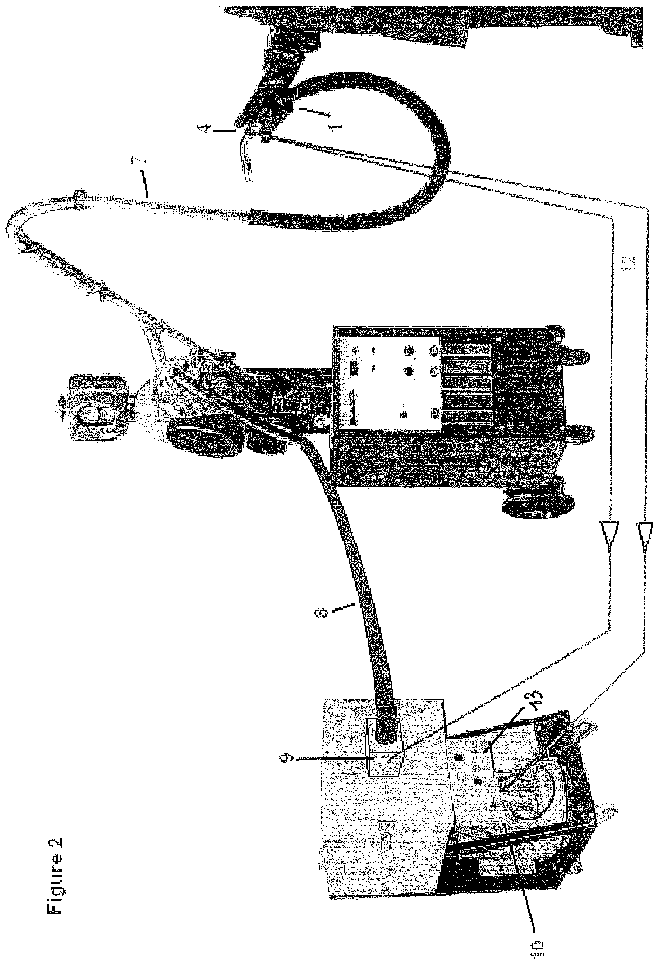

Comme illustré en Figures 2 à 4, un dispositif ou système d'aspiration 10 des fumées, relié fluidiquement à la torche, permet de mettre en dépression la ligne d'aspiration 8, le conduit d'évacuation des fumées aménagé dans le corps 1 de la torche de la torche et la portion tubulaire 5 de manière à pourvoir opérer une aspiration des fumées et leur extraction de la zone de soudage.

Selon le modèle de torche, le refroidissement est :
- soit du type naturel ou à l'air, c'est-à-dire que les calories dégagées par l'effet Joule des connexions et des câbles de puissance et des calories dégagés par l'arc électrique, sont évacués par convexion, mais, suivant les cas, le flux d'aspiration qui circule dans le coude et le manche de la torche peut également avoir une action de refroidissement de l'outil tenu dans la main de l'opérateur.
- soit du type refroidi à l'eau. Dans ce cas, un groupe de refroidissement d'eau (pompe + échangeur) alimente un circuit spécifique de la torche pour refroidir le câble de puissance, la lance de torche, et les pièces d'usure.

La torche de l'invention est particulièrement adaptée à tout procédé de soudage manuel à l'arc électrique, en particulier de soudage MIG/MAG.

Selon l'invention, le dispositif de commande à distance 4 est conçu pour permettre à l'opérateur de commander à distance, le système d'aspiration 10 des fumées afin de lui permettre de réguler le débit d'aspiration des fumées aspirées par la portion tubulaire 5 coudée et qui circule en direction du conduit d'évacuation du corps de torche 1, puis de la ligne d'aspiration 8.

Le dispositif de commande comprend par exemple un (ou plusieurs) bouton-poussoir actionnable ou activable par pression digitale de l'opérateur.

Plus précisément, lorsqu'il est actionné par l'opérateur, le (ou les) bouton poussoir du dispositif de commande à distance 4 délivre un signal de commande électrique permettant, notamment, de mettre en marche ou d'arrêter le système d'aspiration 10.

Par exemple, on peut prévoir un premier bouton-poussoir pour commander la mise en marche du système d'aspiration 10 et un deuxième bouton-poussoir pour commander son arrêt ou, de façon alternative, on peut aussi utiliser un bouton-poussoir et un télérupteur pour commander ces actions.

En fait, lorsqu'il est actionné par l'opérateur, le (ou les) bouton poussoir du dispositif de commande à distance 4 peut délivrer notamment un signal de commande électrique agissant sur le fonctionnement du système d'aspiration en « tout ou rien ».

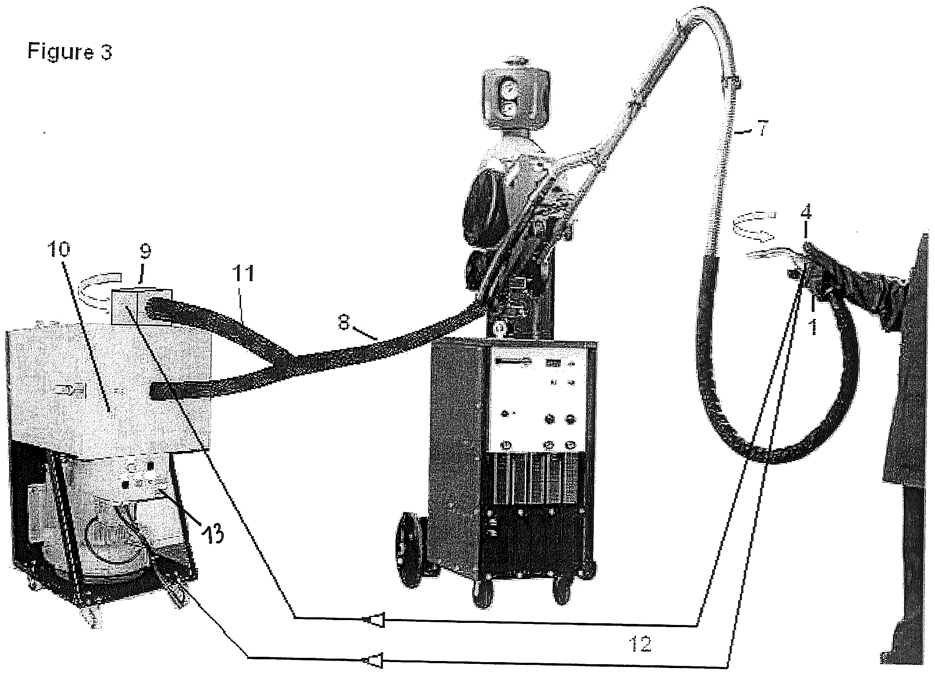

Pour pouvoir moduler le débit d'aspiration à distance, un « registre » ou vanne motorisée 9 est inséré
- soit en série entre la torche 1 et le système d'aspiration 10, c'est-à-dire sur la ligne d'aspiration 8, comme illustré en Figure 2, de manière à y créer une perte de charge et diminuer ainsi le débit d'aspiration des fumées au niveau de la torche.
- soit en parallèle, sur une ligne supplémentaire 11 reliée par une extrémité à l'atmosphère ambiante et par son autre extrémité à la ligne d'aspiration 8, comme illustré en Figure 3, de manière à créer un débit de gaz « parallèle » aspiré par la système d'aspiration 10 en même temps que le débit de fumées véhiculé par la ligne d'aspiration 8, ce qui diminue alors le débit d'aspiration des fumées au niveau de la torche, puisque la capacité de succion du système d'aspiration 10 ne varie pas.

Conformément à l'invention, et comme illustré en Figures 2 et 3, le dispositif de commande à distance 4 de la torche est relié électriquement, via des moyens de connexions 12, au registre ou vanne motorisée 9, agencés sur la ligne d'aspiration 8 ou sur une ligne supplémentaire 11 reliée fluidiquement à ladite ligne d'aspiration 8.

De façon générale, un registre est une plaque mobile permettant de régler le flux au sein d'un conduit, tel le tirage d'une cheminée. Dans le cas présent, il s'agit d'une vanne de grand diamètre, dont le circuit fluidique est modulé grâce à un élément mobile, tel un clapet mobile, à une guillotine, un papillon ou un diaphragme. Cet élément mobile est actionné par un servomoteur électrique ou pneumatique.

Comme le montrent les Figures 2 et 3, le dispositif de commande à distance 4 est en outre relié électriquement, via les moyens de connexions 12, aux moyens de pilotage 13 du système d'aspiration 10 de fumées.

Selon l'invention, le dispositif de commande à distance 4 agit directement, lorsqu'il est actionné par l'opérateur, sur les moyens de pilotage 13 du système d'aspiration 10, qui comprennent par exemple un variateur de vitesse, de manière à régler, moduler ou ajuster la vitesse de rotation du moteur équipant ledit système d'aspiration 10, par exemple une turbine motorisée, et donc de moduler aussi le débit d'aspiration dudit système d'aspiration 10.

Le dispositif de commande 4 comprend par exemple un (ou plusieurs) bouton-poussoir actionnable ou activable par pression digitale de l'opérateur.

Plus précisément, lorsqu'il est actionné par l'opérateur, le (ou les) bouton poussoir du dispositif de commande à distance 4 délivre un signal de commande électrique permettant, selon le cas, soit de mettre en marche ou d'arrêter le système d'aspiration 10, soit de faire varier le débit d'aspiration dudit système d'aspiration 10.

Par exemple, on peut prévoir un premier organe électrique pour commander la mise en marche-arrêt du système d'aspiration 10, un deuxième organe électrique pour commander le fonctionnement de la vanne motorisée, et un troisième organe électrique pour régler la vitesse de rotation du moteur équipant ledit système d'aspiration 10.

En fait, lorsqu'il est actionné par l'opérateur, les boutons du dispositif de commande à distance 4 peuvent délivrer un signal de commande électrique agissant sur le fonctionnement du système d'aspiration en « tout ou rien » ou en mode « régulation » du débit d'aspiration, et sur le fonctionnement de la vanne motorisée pour réguler aussi le débit d'aspiration.

L'action de la commande à distance 4 sur le fonctionnement de la vanne motorisée 9 et le contact électrique résultant de l'activation par l'opérateur du (des) bouton-poussoir du dispositif de commande à distance 4 peut gérer le fonctionnement de la manière suivante :
- soit fonctionnement par action directe : le soudeur appuie sur le bouton, un signal électrique est envoyé vers le registre ou vanne à motorisée 9 qui est alors manoeuvrée dans un sens de manière à venir obturer, plus ou moins, la ligne sur laquelle il/elle est installé(e), et le débit d'aspiration diminue alors plus ou moins. Lorsque le soudeur relâche le bouton, le registre ou la vanne à fermeture 9 est alors manoeuvré(e) automatiquement dans le sens inverse et le débit redevient nominal.
- soit fonctionnement par impulsion : Pendant le soudage, le soudeur appuie sur le bouton, le registre ou vanne motorisée 9 est activé(e) comme précédemment, et le débit d'aspiration diminue. Lorsqu'il relâche le bouton, le débit reste réduit. Pour retrouver le débit nominal, le soudeur doit redonner une nouvelle impulsion sur le bouton de manière à commander un mouvement inverse du registre ou de la vanne motorisée 9.

Dans tous les cas, le débit d'aspiration redevient nominal automatiquement au réamorçage de l'arc de soudage, sans action volontaire sur le bouton poussoir.

Outre un actionnement par bouton-poussoir, la commande du système d'aspiration 10 de fumées peut également se faire via un commutateur à plots ou un potentiomètre de réglage agencé ou incorporé dans le dispositif de commande à distance 4.

Avantageusement, on utilise par exemple un commutateur à plots apte à agir sur le variateur de fréquence qui alimente le moteur de la turbine du système d'aspiration 10. Chaque palier permet le réglage d'une vitesse donnée de rotation du moteur, ce qui permet au soudeur d'obtenir plusieurs débits d'aspiration grâce à une modulation « par paliers ».

Toutefois, on peut aussi utiliser un potentiomètre de réglage électrique pour agir sur ledit variateur de fréquence 13 alimentant le moteur de la turbine du système d'aspiration 10. Dans ce cas, le réglage de la vitesse de rotation du moteur permet d'obtenir une modulation « directe et variable » du débit d'aspiration au niveau de la torche.

Bien entendu, on peut également commander de cette façon, les phases d'arrêt et de marche, i.e. de fonctionnement, dudit moteur.

Plus généralement, il est possible de concevoir le dispositif de commande à distance 4 sous la forme d'un module spécifique, par exemple à 4 boutons, qui combine à la fois les commandes du générateur, telle la puissance de l'arc, et celles du système d'aspiration 10, en particulier le débit d'aspiration.

La Figure 4 illustre un exemple d'une installation de soudage à l'arc hors invention qui ne comprend pas de moyens de contrôle de passage de gaz 9. Le dispositif de commande à distance 4 agit uniquement sur les moyens de pilotage 13 du système d'aspiration 10. Or, une telle installation n'est pas idéale car elle ne permet pas une modulation à distance efficace du débit d'aspiration, notamment un réglage aisé, rapide et précis du débit d'aspiration par l'opérateur, contrairement à la présente invention.

La torche de l'invention est particulièrement adaptée à tout procédé de soudage manuel à l'arc électrique, en particulier de soudage MIG/MAG.

## Revendications

1. Installation de soudage à l'arc comprenant une torche manuelle de soudage à l'arc électrique et un système d'aspiration (10) de fumées relié fluidiquement à ladite torche de soudage par une ligne d'aspiration (8) de fumées, dans laquelle ladite torche comprend :
- un corps de torche (1) comprenant un manche de manipulation (2), une gâchette de commande électrique (3) et un dispositif de commande à distance (4),
- un conduit d'évacuation des fumées traversant le corps (1) de torche et apte à être raccordé fluidiquement à la ligne d'aspiration (8) de fumées,
- une portion tubulaire coudée (5), fixée audit corps de torche (1), comprenant un passage interne en communication fluidique avec le conduit d'évacuation des fumées traversant le corps de torche (1), et
- une buse de soudage (6) fixée à ladite portion tubulaire (5) coudée,
- des moyens de connexion (12) aptes à et conçus pour relier électriquement le dispositif de commande à distance (4) de la torche :
. à des moyens de contrôle de passage de gaz (9) agencés sur la ligne d'aspiration (8) ou sur une ligne supplémentaire (11) reliée fluidiquement à ladite ligne d'aspiration (8), et
. aux moyens de pilotage (13) du système d'aspiration (10) de fumées,
**caractérisée en ce que** le dispositif de commande à distance (4) est apte à et conçu pour, lorsqu'il est actionné par l'opérateur :
- agir sur des moyens de contrôle de passage de gaz (9) agencés sur la ligne d'aspiration (8) ou sur une ligne supplémentaire (11) reliée fluidiquement à ladite ligne d'aspiration (8) de manière à faire varier le débit de fumées aspirées circulant dans au moins une partie de ladite ligne d'aspiration (8), dans le conduit d'évacuation des fumées et dans la portion tubulaire coudée (5) de la torche, et
- agir sur les moyens de pilotage (13) du système d'aspiration (10) de fumées de sorte que lesquels moyens de pilotage (13) rétroagissent sur un moteur dudit système d'aspiration (10) de fumées pour faire varier la vitesse de rotation dudit moteur et moduler le débit d'aspiration du système d'aspiration (10) de fumées.

2. Installation selon la revendication précédente, **caractérisée en ce que** le dispositif de commande à distance (4) est apte à et conçu pour, lorsqu'il est actionné par l'opérateur, agir sur les moyens de pilotage (13) du système d'aspiration (10) de fumées de manière à mettre en marche ou, à l'inverse, stopper le système d'aspiration (10).

3. Installation selon l'une des revendications précédentes, **caractérisée en ce que** le dispositif de commande à distance (4) est apte à et conçu pour, lorsqu'il est actionné par l'opérateur, agir sur les moyens de contrôle de passage de gaz (9) agencés sur la ligne d'aspiration (8) ou sur une ligne supplémentaire (11) reliée fluidiquement à ladite ligne d'aspiration (8) de manière à ce que les moyens de contrôle de passage de gaz (9) viennent obturer plus ou moins la ligne sur laquelle lesdits moyens de contrôle de passage de gaz (9) pour diminuer plus ou moins le débit d'aspiration.

4. Installation selon l'une des revendications précédentes, **caractérisée en ce que** le système d'aspiration (10) de fumées est une turbine motorisée.

5. Installation selon l'une des revendications précédentes, **caractérisée en ce que** les moyens de contrôle de passage de gaz (9) agencés sur la ligne d'aspiration (8) ou sur une ligne supplémentaire (11) reliée fluidiquement à ladite ligne d'aspiration (8) comprennent un registre ou une vanne à fermeture.

6. Installation selon l'une des revendications précédentes, **caractérisée en ce que** la portion tubulaire (5) coudée de la torche comprend un premier conduit interne venant se raccorder à un deuxième conduit interne du corps de torche (1), lesdites premier et deuxième conduits servant à véhiculer au moins un fil fusible de soudage.

7. Installation selon l'une des revendications précédentes, **caractérisée en ce que** le corps (1) de la torche est relié en outre par une ou des liaisons électriques à un générateur de courant (15) de soudage et/ou à un dévidoir de fil (16) comportant une bobine de fil et/ou par au moins une liaison fluidique à une source de gaz de soudage (17), de préférence les liaisons électriques et fluidique sont rassemblées au sein d'un faisceau de câbles et de conduits (7).

8. Installation selon l'une des revendications précédentes, **caractérisée en ce que** le dispositif de commande à distance (4) est en outre relié électriquement au générateur de courant de soudage (15) ou au dévidoir de fil (16).

9. Installation selon l'une des revendications précédentes, **caractérisée en ce que** la ligne supplémentaire (11) est reliée fluidiquement par une extrémité aval à la ligne d'aspiration (8) et comprend par ailleurs une extrémité amont reliée fluidiquement à l'atmosphère ambiante.

10. Installation selon l'une des revendications précédentes, **caractérisée en ce que** les moyens de connexion (12) comprennent un ou plusieurs câbles électriques.

11. Installation selon l'une des revendications précédentes, **caractérisée en ce que** les moyens de pilotage (13) du système d'aspiration (10) de fumées comprennent un variateur de fréquence qui alimente en courant électrique le moteur dudit système d'aspiration (10) de fumées et l'actionnement du dispositif de commande à distance (4) engendre une commande du variateur de fréquence résultant en une variation de la vitesse de rotation du moteur du système d'aspiration (10) de fumées.

12. Installation selon l'une des revendications précédentes, **caractérisée en ce que** le dispositif de commande à distance (4) comprend au moins un bouton poussoir, un commutateur à plots ou un potentiomètre actionnable par l'opérateur.

13. Torche manuelle de soudage à l'arc électrique pour une installation selon l'une des revendications précédentes comprenant :
- un corps de torche (1) comprenant un manche de manipulation (2), une gâchette de commande électrique (3) et un dispositif de commande à distance (4),
- un conduit d'évacuation des fumées traversant le corps (1) de torche et apte à être raccordé fluidiquement à une ligne d'aspiration (8) de fumées,
- une portion tubulaire coudée (5), fixée audit corps de torche (1), comprenant un passage interne (13) en communication fluidique avec le conduit d'évacuation des fumées (9) traversant le corps de torche (1),
- une buse de soudage (6) fixée à ladite portion tubulaire (5) coudée, et des moyens de connexion (12) aptes à et conçus pour relier électriquement le dispositif de commande à distance (4) de la torche à des moyens de contrôle de passage de gaz (9) agencés sur une ligne d'aspiration (8) ou sur une ligne supplémentaire (11) reliée fluidiquement à la ligne d'aspiration (8), et aux moyens de pilotage (13) d'un système d'aspiration (10) de fumées, **caractérisée en ce que** le dispositif de commande à distance (4) est apte à et conçu pour, lorsqu'il est actionné par l'opérateur :
- agir sur des moyens de contrôle de passage de gaz (9) agencés sur la ligne d'aspiration (8) ou sur une ligne supplémentaire (11) reliée fluidiquement à ladite ligne d'aspiration (8) de manière à faire varier le débit de fumées aspirées circulant dans au moins une partie de ladite ligne d'aspiration (8), dans le conduit d'évacuation des fumées et dans la portion tubulaire coudée (5) de la torche, et
- agir sur les moyens de pilotage (13) du système d'aspiration (10) de fumées de sorte que lesquels moyens de pilotage (13) rétroagissent sur un moteur dudit système d'aspiration (10) de fumées pour faire varier la vitesse de rotation dudit moteur et moduler le débit d'aspiration du système d'aspiration (10) de fumées.

14. Torche selon la revendication 13, **caractérisée en ce qu'**elle est de type MIG/MAG.

15. Procédé de soudage manuel à l'arc électrique, en particulier de soudage MIG/MAG, mettant en oeuvre une installation de soudage selon l'une des revendications 1 à 12.

## Patentansprüche

1. Lichtbogen-Schweißanlage, umfassend einen Lichtbogenhandschweißbrenner und ein Rauchabsaugsystem (10), das über eine Rauchabsaugleitung (8) mit dem Schweißbrenner fluidisch verbunden ist, wobei der Brenner aufweist:
- einen Brennerkörper (1), umfassend einen Handhabungsgriff (2), einen elektrischen Steuerauslöser (3) und eine Fernsteuervorrrichtung (4),
- einen Rauchabfuhrkanal, der den Brennerkörper (1) durchquert und geeignet ist, an die Rauchabsaugleitung (8) fluidisch angeschlossen zu werden,
- einen gekrümmten röhrenförmigen Abschnitt (5), der an dem Brennerkörper (1) befestigt ist, der einen inneren Durchgang in Fluidverbindung mit dem. Rauchabfuhrkanal aufweist, der den Brennerkörper (1) durchquert, und
- eine Schweißdüse (6), die an dem gekrümmten röhrenförmigen Abschnitt (5) befestigt ist,
- Verbindungsmittel (12), die geeignet und ausgebildet sind, um die Fernsteuervorrichtung (4) des Brenners elektrisch zu verbinden:
. mit Kontrollmitteln des Gasdurchgangs (9), die an der Absaugleitung (8) oder an einer zusätzlichen Leitung (11) angeordnet sind, die mit der Absaugleitung (8) fluidisch verbunden ist, und
. mit Steuermitteln (13) des Rauchabsaugsystems (10),
**dadurch gekennzeichnet, dass** die Fernsteuervorrichtung (4) geeignet und ausgebildet ist, um, wenn sie von der Bedienperson betätigt wird:
- auf Kontrollmittel des Gasdurchgangs (9), die an der Absaugleitung (8) oder an einer zusätzlichen Leitung (11) angeordnet sind, die mit der Absaugleitung (8) fluidisch verbunden ist, derart einzuwirken, um den Durchsatz des abgesaugten Rauchs, der in mindestens einem Teil der Absaugleitung (8), in dem Rauchabfuhrkanal und in dem gekrümmten röhrenförmigen Abschnitt (5) des Brenners zirkuliert, zu variieren, un
- auf die Steuermittel (13) des Rauchabsaugsystems (10) derart einzuwirken, dass die Steuermittel (13) rückwirkend auf einen Motor des Rauchabsaugsystems (10) einwirken, um die Drehzahl des Motors zu variieren und den Absaugdurchsatz des Rauchabsaugsystems (10) zu verändern.

2. Anlage nach dem vorhergehenden Anspruch, **dadurch gekennzeichnet, dass** die Fernsteuervorrichtung (4) geeignet und ausgebildet ist, um, wenn sie von der Bedienperson betätigt wird, auf die Steuermittel (13) des Rauchabsaugsystems (10) derart einzuwirken, um das Absaugsystem (10) einzuschalten oder umgekehrt zu stoppen.

3. Anlage nach einem der vorhergehenden Ansprüche, **dadurch gekennzeichnet, dass** die Fernsteuervorrichtung (4) geeignet und ausgebildet ist, um, wenn sie von der Bedienperson betätigt wird, auf die Kontrollmittel des Gasdurchgangs (9), die an der Absaugleitung (8) oder an einer zusätzlichen Leitung (11) angeordnet sind, die mit der Absaugleitung (8) fluidisch verbunden ist, derart einzuwirken, damit die Kontrollmittel des Gasdurchgangs (9) die Leitung mehr oder weniger schließen, auf der die Kontrollmittel des Gasdurchgangs (9), um den Absaugdurchsatz mehr oder weniger zu verringern.

4. Anlage nach einem der vorhergehenden Ansprüche, **dadurch gekennzeichnet, dass** das Rauhabsaugsystem (10) eine motorisierte Turbine ist.

5. Anlage nach einem der vorhergehenden Ansprüche, **dadurch gekennzeichnet, dass** die Kontrollmittel des Gasdurchgangs (9), die an der Absaugleitung (8) oder an einer zusätzlichen Leitung (11) angeordnet sind, die mit der Absaugleitung (8) fluidisch verbunden ist, ein Absperrorgan oder ein Absperrventil aufweisen.

6. Anlage nach einem der vorhergehenden Ansprüche, **dadurch gekennzeichnet, dass** der gekrümmte röhrenförmige Abschnitt (5) des Brenners eine erste innere Leitung aufweist, die sich an eine zweite innere Leitung des Brennerkörpers (1) anschließt, wobei die erste und zweite Leitung dazu dienen, mindestens einen Schmelzschweißdraht zu befördern.

7. Anlage nach einem der vorhergehenden Ansprüche, **dadurch gekennzeichnet, dass** der Körper (1) des Brenners ferner durch eine elektrische Verbindung oder durch elektrische Verbindungen mit einem Schweißstromgenerator (15) und/oder einem Drahtabroller (16), der eine Drahtrolle aufweist, und/oder durch mindestens eine fluidische Verbindung mit einer Schweißgasquelle (17) verbunden ist, die elektrische und die fluidische Verbindung vorzugsweise in einem Bündel von Kabeln und Leitungen (7) zusammengefasst sind.

8. Anlage nach einem der vorhergehenden Ansprüche, **dadurch gekennzeichnet, dass** die Fernsteuervorrichtung (4) ferner mit dem Schweißstromgenerator (15) oder mit dem Drahtabroller (16) elektrisch verbunden ist.

9. Anlage nach einem der vorhergehenden Ansprüche, **dadurch gekennzeichnet, dass** die zusätzliche Leitung (11) durch ein stromabwärtiges Ende mit der Absaugleitung (8) fluidisch verbunden ist und ferner ein stromaufwärtiges Ende aufweist, das mit der Umgebungsatmosphäre fluidisch verbunden ist.

10. Anlage nach einem der vorhergehenden Ansprüche, **dadurch gekennzeichnet, dass** die Verbindungsmittel (12) ein oder mehrere elektrische Kabel aufweisen.

11. Anlage nach einem der vorhergehenden Ansprüche, **dadurch gekennzeichnet, dass** die Steuermittel (13) des Rauchabsaugsystems (10) einen Frequenzumrichter aufweisen, der den Motor des Rauchabsaugsystems (10) mit Strom versorgt, und das Betätigen der Fernsteuervorrichtung (4) eine Steuerung des Frequenzumrichters hervorruft, was zu einer Änderung der Drehzahl des Motors des Rauchabsaugsystems (10) führt.

12. Anlage nach einem der vorhergehenden Ansprüche, **dadurch gekennzeichnet, dass** die Fernsteuervorrichtung (4) mindestens einen Druckknopf, einen Stufenschalter oder ein von einer Bedienungsperson betätigbares Potentiometer aufweist.

13. Lichtbogenhandschweißbrenner für eine Anlage nach einem der vorhergehenden Ansprüche, umfassend:
- einen Brennerkörper (1), umfassend einen Handhabungsgriff (2), einen elektrischen Steuerauslöser (3) und eine Fernsteuervorrrichtung (4),
- einen Rauchabfuhrkanal, der den Brennerkörper (1) durchquert und geeignet ist, an eine Rauchabsaugleitung (8) fluidisch angeschlossen zu werden,
- einen gekrümmten röhrenförmigen Abschnitt (5), der an dem Brennerkörper (1) befestigt ist, der einen inneren Durchgang (13) in Fluidverbindung mit dem Rauchabfuhrkanal aufweist, der den Brennerkörper (1) durchquert,
- eine Schweißdüse (6), die an dem gekrümmten röhrenförmigen Abschnitt (5) befestigt ist,
und Verbindungsmittel (12), die geeignet und ausgebildet sind, um die Fernsteuervorrichtung (4) des Brenners mit Kontrollmitteln des Gasdurchgangs (9), die an der Absaugleitung (8) oder an einer zusätzlichen Leitung (11) angeordnet sind, die mit der Absaugleitung (8) fluidisch verbunden ist, und mit den Steuermitteln (13) eines Rauchabsaugsystems (10) elektrisch zu verbinden, **dadurch gekennzeichnet, dass** die Fernsteuervorrichtung (4) geeignet und ausgebildet ist, um, wenn sie von der Bedienperson betätigt wird:
- auf Kontrollmittel des Gasdurchgangs (9), die an der Absaugleitung (8) oder an einer zusätzlichen Leitung (11) angeordnet sind, die mit der Absaugleitung (8) fluidisch verbunden ist, derart einzuwirken, um den Durchsatz des abgesaugten Rauchs, der in mindestens einem Teil der Absaugleitung (8), in dem Rauchabfuhrkanal und in dem gekrümmten röhrenförmigen Abschnitt (5) des Brenners zirkuliert, zu variieren, und
- auf die Steuermittel (13) des Rauchabsaugsystems (10) derart einzuwirken, dass die Steuermittel (13) rückwirkend auf einen Motor des Rauchabsaugsystems (10) einwirken, um die Drehzahl des Motors zu variieren und den Absaugdurchsatz des Rauchabsaugsystems (10) zu verändern.

14. Brenner nach Anspruch 13, **dadurch gekennzeichnet, dass** er des Typs des MIG/MAG-Brenners ist.

15. Manuelles Lichtbogen-Schweißverfahren, insbesondere des MIG/MAG- Schweißens, das eine Schweißanlage nach einem der Ansprüche 1 bis 12 einsetzt.

## Claims

1. An arc-welding installation comprising a manual electrical arc-welding torch and a flue gas suction system (10) fluidically connected to said welding torch by a flue gas suction line (8), wherein said torch comprises:
- a torch body (1) comprising a manipulation handle (2), an electrical control gate (3) and a remote control device (4);
- a flue gas discharge conduit that passes through the torch body (1) and is suitable for fluidic connection to the flue gas suction line (8);
- an angled tubular portion (5) that is fixed to said torch body (1) and comprises an internal passage in fluidic communication with the flue gas discharge conduit passing through the torch body (1), and
- a welding nozzle (6) fixed to said angled tubular portion (5),
- connection means (12) suitable and designed for electrical connection of the remote control device (4) of the torch:
• to gas passage control means (9) arranged on the suction line (8) or on an additional line (11) fluidically connected to said suction line (8); and
• to management means (13) of the flue gas suction system (10),
**characterised in that** the remote control device (4) is suitable and designed, when actuated by the operator:
- for acting on the gas passage control means (9) arranged on the suction line (8) or on an additional line (11) fluidically connected to said suction line (8) so as to vary the flow of suctioned flue gas circulating in at least part of said suction line (8), in the flue gas discharge conduit and in the angled tubular portion (5) of the torch, and
- for acting on the management means (13) of the flue gas suction system (10) such that the management means (13) act on a motor of said flue gas suction system (10) so as to vary the rotation speed of said motor and to modulate the suction flow rate of the flue gas suction system (10).

2. The installation according to the preceding claim, **characterised in that** the remote control device (4) is suitable and designed, when actuated by the operator, for acting on the management means (13) of the flue gas suction system (10) so as to switch on or, conversely, stop the suction system (10).

3. The installation according to either one of the preceding claims, **characterised in that** the remote control device (4) is suitable and designed, when actuated by the operator, for acting on the gas passage control means (9) arranged on the suction line (8) or on an additional line (11) connected fluidically to said suction line (8) such that the gas passage control means (9) seal, to a greater or lesser extent, the line on which said gas passage control means (9) are arranged in order to reduce the suction flow rate to a greater or lesser extent.

4. The installation according to any one of the preceding claims, **characterised in that** the flue gas suction system (10) is a motorised turbine.

5. The installation according to any one of the preceding claims, **characterised in that** the gas passage control means (9) arranged on the suction line (8) or on an additional line (11) fluidically connected to said suction line (8) comprises a damper or a shut-off valve.

6. The installation according to any one of the preceding claims, **characterised in that** the angled tubular portion (5) of the torch comprises a first inner conduit for connection to a second inner conduit of the torch body (1), said first and second conduits being used to convey at least one fusible welding wire.

7. The installation according to any one of the preceding claims, **characterised in that** the body (1) of the torch is also connected by means of one or more electrical connections to a welding current generator (15) and/or to a wire dispenser (16) comprising a wire reel and/or by means of at least one fluidic connection to a welding gas source (17), the electrical and fluidic connections preferably being combined within a bundle of cables and conduits (7).

8. The installation according to any one of the preceding claims, **characterised in that** the remote control device (4) is also electrically connected to the welding current generator (15) or to the wire dispenser (16).

9. The installation according to any one of the preceding claims, **characterised in that** the additional line (11) is fluidically connected by means of a downstream end to the suction line (8) and also comprises an upstream end fluidically connected to the ambient atmosphere.

10. The installation according to any one of the preceding claims, **characterised in that** the connection means (12) comprise one or more electrical cables.

11. The installation according to any one of the preceding claims, **characterised in that** the management means (13) of the flue gas suction system (10) comprise a frequency converter which supplies electrical current to the motor of said flue gas suction system (10) and the actuation of the remote control device (4) leads to a command being issued to the frequency converter, resulting in a variation of the speed of rotation of the motor of the flue gas suction system (10).

12. The installation according to any one of the preceding claims, **characterised in that** the remote control device (4) comprises at least one pushbutton, a step switch, or a potentiometer actuatable by the operator.

13. A manual electric arc-welding torch for an installation according to any one of the preceding claims, comprising:
- a torch body (1) comprising a manipulation handle (2), an electrical control gate (3) and a remote control device (4);
- a flue gas discharge conduit that passes through the torch body (1) and is suitable for fluidic connection to a flue gas suction line (8);
- an angled tubular portion (5) that is fixed to the torch body (1) and comprises an internal passage in fluidic communication with the flue gas discharge conduit (9) passing through the torch body (1),
- a welding nozzle (6) fixed to said angled tubular portion (5), and
- connection means (12) suitable and designed for electrical connection of the remote control device (4) of the torch to gas passage control means (9) arranged on a suction line (8) or on an additional line (11) fluidically connected to the suction line (8), and to management means (13) for the flue gas suction system (10), **characterised in that** the remote control device (4) is suitable and designed, when actuated by the operator:
- for acting on the gas passage control means (9) arranged on the suction line (8) or on an additional line (11) fluidically connected to said suction line (8) so as to vary the flow of suctioned flue gas circulating in at least part of said suction line (8), in the flue gas discharge conduit and in the angled tubular portion (5) of the torch, and
- for acting on the management means (13) of the flue gas suction system (10) such that the management means (13) act on a motor of said flue gas suction system (10) so as to vary the rotation speed of said motor and to modulate the suction flow rate of the flue gas suction system (10).

14. The torch according to claim 13, **characterised in that** it is of the MIG/MAG type.

15. A manual electric arc-welding process, in particular MIG/MAG welding, using a welding installation according to any one of claims 1 to 12.
